# EUROPÄISCHE PATENTANMELDUNG

(11) **EP 2 442 203 A1**
(43) Veröffentlichungstag der Anmeldung: **18.04.2012**
(21) Anmeldenummer: 10013543.3
(22) Anmeldetag: 12.10.2010
(51) Int. Cl.: G05D 23/19, F25B 30/02

(54) **Verfahren zur Regelung für thermodynamische Anlage**

(71) Anmelder: IMMOSOLAR Active Building, 07180 Santa Ponsa (Calvia) (ES)
(72) Erfinder: Vogel, Holger, 07160 Peguera/Mallorca (ES)
(74) Vertreter: Sasse, Stefan

(57) **Zusammenfassung**

Erfindungsgemäß ist ein Verfahren zur Regelung, die in einer thermodynamischen Anlage mit einem ersten Fluidkreislauf (Prozesskreislauf), der einen ersten Wärmeübertrager, einen Verdichter, einen zweiten Wämeübertrager und eine Expansionsvorrichtung aufweist und der von einem Fluid (Prozessfluid) durchflossen ist, einer Fluidvor- und Fluidrücklaufleitung (Primärvorlaufleitung und Primärrücklaufleitung) eines ersten Systems (Primärsystem), die durch den ersten Wärmeübertrager mit dem Prozesskreislauf gekoppelt sind, einer Pumpe (Primärpumpe) des Primärsystems, durch die ein, insbesondere weiteres, Fluid (Primärfluid) durch die Primärvorlaufleitung und Primärrücklaufleitung pumpbar ist, einer Fluidvor- und Fluidrücklaufleitung (Sekundärvorlaufleitung und Sekundärrücklaufleitung) eines zweiten Systems (Sekundärsystem), die durch den zweiten Wärmeübertrager mit dem Prozesskreislauf gekoppelt sind, und einer Pumpe (Sekundärpumpe) des Sekundärsystems, durch die ein, insbesondere weiteres, Fluid (Sekundärfluid) durch die Sekundärvorlaufleitung und Sekundärrücklaufleitung pumpbar ist, ausgeführt wird, dadurch gekennzeichnet, dass ein Regler eine Temperaturdifferenz des Primärfluids zwischen der Primärvorlaufleitung und der Primärrücklaufleitung (Primärregelgröße) durch ein Stellen der Primärpumpe und/oder des Sekundärfluids zwischen der Sekundärvorlaufleitung und der Sekundärrücklaufleitung (Sekundärregelgröße) durch ein Stellen der Sekundärpumpe regelt, sowie eine entsprechende Vorrichtung zur Regelung einer thermodynamischen Anlage.

## Beschreibung

Die Erfindung betrifft Verfahren zur Regelung, die in einer thermodynamischen Anlage mit einem ersten Fluidkreislauf (Prozesskreislauf), der einen ersten Wärmeübertrager, einen Verdichter, einen zweiten Wärmeübertrager und eine Expansionsvorrichtung aufweist und der von einem Fluid (Prozessfluid) durchflossen ist, einer Fluidvor- und Fluidrücklaufleitung (Primärvorlaufleitung und Primärrücklaufleitung) eines ersten Systems (Primärsystem), die durch den ersten Wärmeübertrager mit dem Prozesskreislauf gekoppelt sind, einer Pumpe (Primärpumpe) des Primärsystems, durch die ein, insbesondere weiteres, Fluid (Primärfluid) durch die Primärvorlaufleitung und Primärrücklaufleitung pumpbar ist, einer Fluidvor- und Fluidrücklaufleitung (Sekundärvorlaufleitung und Sekundärrücklaufleitung) eines zweiten Systems (Sekundärsystem), die durch den zweiten Wärmeübertrager mit dem Prozesskreislauf gekoppelt sind, und einer Pumpe (Sekundärpumpe) des Sekundärsystems, durch die ein, insbesondere weiteres, Fluid (Sekundärfluid) durch die Sekundärvortaufleitung und Sekundärrücklaufleitung pumpbar ist, ausgeführt wird, sowie eineVorrichtung zur Regelung einer thermodynamischen Anlage mit einem Prozesskreislauf, der einen ersten Wärmeübertrager, einen Verdichter, einen zweiten Wärmeübertrager und eine Expansionsvorrichtung aufweist und der von einem Prozessfluid durchflossen ist, einer Primärvorlaufleitung und Primärrücklaufleitung eines Primärsystems, die durch den ersten Wärmeübertrager mit dem Prozesskreislauf gekoppelt sind, einer Primärpumpe des Primärsystems, durch die ein, insbesondere weiteres, Primärfluid durch die Primärvorlaufleitung und Primärrücklaufleitung pumpbar ist, einer Sekundärvorlaufleitung und Sekundärrücklaufleitung eines zweiten Sekundärsystems, die durch den zweiten Wärmeübertrager mit dem Prozesskreislauf gekoppelt sind, undeiner Sekundärpumpe des Sekundärsystems, durch die ein, insbesondere weiteres, Sekundärfluid durch die Sekundärvorlaufleitung und Sekundärrücklaufleitung pumpbar ist

### Stand der Technik

Thermodynamische Anlagen der zuvor genannten Art sind aus dem Stand der Technik bekannt. Sie können beispielsweise eine Wärmepumpe oder eine Kältemaschine sein. Eine thermodynamische Anlage dieser Art kann insbesondere zu Heiz- oder Kühlzwecken eingesetzt werden. Für den Heizbetrieb werden typischerweise Wärmepumpen zur Erwärmung von Heizungswasser oder Brauwasser eingesetzt. Hierbei nimmt das Prozessfluid durch den ersten Wärmeübertrager eine Wärmeleistung einer Umweltenergiequelle auf. Das somit durch den Wärmeübertrager erwärmte Prozessfluid fließt zu dem Verdichter. Von dem Verdichter wird das Prozessfluid komprimiert und zusätzlich erwärmt. Das Prozessfluid fließt daraufhin durch den zweiten Wärmeübertrager und gibt dabei aufgrund des höheren nutzbaren Temperaturniveaus Wärmeenergie an einen Verbraucher, wie beispielsweise eine Heizung, ab. Das Prozessfluid wird daraufhin in der Expansionsvorrichtung entspannt, sodass es sich auch abkühlt. Aufgrund des Fluidkreislaufes trifft das Prozessfluid sodann wieder auf den ersten Wärmeübertrager.

Die Wirkungsweise einer Kältemaschine ist analog zu der Wärmepumpe. Der wesentliche Unterschied zwischen den beiden Vorrichtungen ist, dass sie mit einem unterschiedlichen Ziel betrieben werden. Denn durch die Kältemaschine wird einem der Systeme zweckmäßig Energie entzogen und eben nicht wie bei der Wärmpumpe Wärmeenergie hinzugefügt.

Die aus dem Stand der Technik bekannten thermodynamischen Anlagen der genannten Art weisen vielfach Primär- und/oder Sekundärpumpen mit einer konstanten Fluidförderleistung auf. Die Pumpen werden also unabhängig von der Temperatur des Fluids betrieben, das die Leitungen durchfließt. Es wird also vielfach auch nicht berücksichtigt, dass sich auch die Wärmeleistung bei einer sich mit der Zeit ändernden Temperatur des Fluids ändert. Ein entsprechender Sachverhalt gilt insbesondere für das Primärsystem. Das Primärsystem wird vielfach mit einer Primärpume betrieben, die mit einer konstanten Förderleistung pumpt. Bei einer sich mit der Zeit ändernden Temperatur und/oder Wärmeleistung des Primärfluids in der Primärvorlaufleitung, ändert sich in direkter Abhängigkeit die dem ersten Wärmeübertrager zur Verfügung stehende Temperatur und/oder Wärmeleistung des Primärfluids.

Ein analoger Sachverhalt gilt für die Sekundärseite. Auch das Sekundärsystem wird vielfach mit einer Sekundärpumpe betrieben, die mit einer konstanten Förderleistung pumpt. Ändert sich die Wärmeleistung des Sekundärfluids mit der Zeit in der Sekundärvorlaufleitung, so variiert auch die Wärmeleistung, die durch das Sekundärsystem an die Wärmepumpe beziehungsweise den ersten Wärmeübertrager durch das Sekundärfluid geleitet wird.

Zuvor wurde erläutert, dass die zur Verfügung gestellte Leistung durch das Primär-und/oder Sekundärsystem sich Insbesondere schnell mit der Zeit ändern kann. Der Übertragungswirkungsgrad einer Leistung des Primärsystems an das Sekundärsystem hängt jedoch stark davon ab, wie gut der erste Wärmeübertrager, der Verdichter, der zweite Wärmeübertrager und/oder die Expansionsvorrichtung auf die Randbedingungen des Primär- und/oder Sekundärsystems angepasst sind.

### Aufgabe

Der Erfindung liegt deshalb die Aufgabe zugrunde, eine thermodynamische Anlage bereitzustellen, die möglichst wirkungsvoll Leistung des Primärsystems an das Sekundärsystem überträgt.

### Beschreibung

Die Aufgabe wird erfindungsgemäß durch ein Verfahren nach Anspruch 1 und/oder durch eine Vorrichtung nach Anspruch 12 gelöst. Weitere Einzelheiten, Vorteile und/oder Merkmale der Erfindung gehen aus der nachfolgenden Beschreibung hervor.

Das erfindungsgemäße Verfahren zur Regelung, die in einer thermodynamischen Anlage mit einem ersten Fluidkreislauf (Prozesskreislauf), der einen ersten Wärmeübertrager, einen Verdichter, einen zweiten Wärmeübertrager und eine Expansionsvorrichtung aufweist und der von einem Fluid (Prozessfluid) durchflossen ist, einer Fluidvor- und Fluidrücklaufleitung (Primärvorlaufleitung und Primärrücklaufleitung) eines ersten Systems (Primärsystem), die durch den ersten Wärmeübertrager mit dem Prozesskreislauf gekoppelt sind, einer Pumpe (Primärpumpe) des Primärsystems, durch die ein, insbesondere weiteres, Fluid (Primärfluid) durch die Primärvorlaufleitung und Primärrücklaufleitung pumpbar ist, einer Fluidvor- und Fluidrücklaufleitung (Sekundärvorlaufleitung und Sekundärrücklaufleitung) eines zweiten Systems (Sekundärsystem), die durch den zweiten Wärmeübertrager mit dem Prozesskreislauf gekoppelt sind, und einer Pumpe (Sekundärpumpe) des Sekundärsystems, durch die ein, insbesondere weiteres, Fluid (Sekundärfluid) durch die Sekundärvorlaufleitung und Sekundärrücklaufleitung pumpbar ist, ausgeführt wird, zeichnet sich dadurch aus, dass ein Regler eine Temperaturdifferenz des Primärfluids zwischen der Primärvorlaufleitung und der Primärrücklaufleitung (Primärregelgröße) durch ein Stellen der Primärpumpe und/oder des Sekundärfluids zwischen der Sekundärvorlaufleitung und der Sekundärrücklaufleitung (Sekundärregelgröße) durch ein Stellen der Sekundärpumpe regelt.

Unter einem Fluidkreislauf kann grundsätzlich eine Anordnung von mehreren Bauelementen verstanden werden, die es ermöglicht, dass ein Fluid zumindest teilweise im Kreis fließen kann. Der erfindungsgemäße Prozesskreislauf weist dazu einen ersten Wärmeübertrager, einen Verdichter, einen zweiten Wärmeübertrager und eine Expansionsvorrichtung auf. Bevorzugt können die soeben genannten Bauteile auch in der genannten Reihenfolge hintereinander angeordnet sein. Sie können dazu bevorzugt jeweils direkt miteinander verbunden sein. Es ist jedoch auch möglich, dass zwischen den einzelnen Bauelementen andere Bauelemente angeordnet sind, sodass die erfindungsgemäßen Bauelemente des Prozesskreislaufes indirekt miteinander verbunden sind. Im einfachsten Fall sind Rohrleitungen zwischen den erfindungsgemäßen Bauelementen des Prozesskreislaufes angeordnet.

Ein theoretisch idealer Kreisprozess ist eine Folge von Zustandsänderungen, an deren Ende der Ausgangszustand wieder erreicht wird. Reale Kreisprozesse, wie sie auch in dem Prozesskreislauf stattfinden, weichen von diesem Idealbild ab. Zwar finden in dem Prozesskreislauf auch eine Folge von Zustandsänderungen statt. An deren Ende wird aber nicht immer der Ausgangszustand wieder erreicht. Im einzelnen können im Prozesskreislauf die folgenden Zustandsänderungen stattfinden:
- Von der Expansionsvorrichtung kommend durchfließt das Prozessfluid den ersten Wärmeübertrager in Richtung des Verdichters. Durch den ersten Wärmeübertrager wird eine Wärmenergie des Primärsystems auf das Prozessfluid übertragen. Das Prozessfluid hat also am Ausgang des ersten Wärmeübertragers eine höhere Temperatur als sie es am Eingang des ersten Wärmeübertragers hatte.
- Vom ersten Wärmeübertrager durchfließt das Prozessfluid den Verdichter in Richtung des zweiten Wärmeübertragers. Der Verdichter komprimiert das Prozessfluid. In dem Prozesskreislauf zwischen dem Ausgang des Verdichters und dem Eingang der Expansionsvorrichtung weist das Prozessfluid deshalb einen höheren Druck als zwischen dem Ausgang der Expansionsvorrichtung und dem Eingang des Verdichters auf. Mit dem steigenden Druck des Prozessfluids steigt auch die Temperatur des Prozessfluids in dem Prozesskreislauf zwischen dem Verdichter und dem zweiten Wärmeübertrager.
- Von dem Verdichter fließt das Prozessfluid durch den zweiten Wärmeübertrager in Richtung der Expansionsvorrichtung. Durch den zweiten Wärmeübertrager wird eine Wärmeleistung von dem Prozessfluid an das Sekundärsystem beziehungsweise Sekundärfluid übertragen. Dadurch sinkt die Temperatur des Prozessfluids in dem zweiten Wärmeübertrager. Das Prozessfluid hat also am Ausgang des zweiten Wärmeübertragers eine geringere Temperatur als am Eingang des zweiten Wärmeübertragers. Bevorzugt fällt der Druck des Prozessfluids über dem zweiten Wärmeübertrager jedoch im Wesentlichen nicht ab.
- Von dem zweiten Wärmeübertrager kommend, fließt das Prozessfluid durch die Expansionsvorrichtung in Richtung des ersten Wärmeübertragers. Durch die Expansionsvorrichtung wird der Druck des Prozessfluids reduziert. Das Prozessfluid hat also am Ausgang der Expansionsvorrichtung einen geringeren Druck als am Eingang der Expansionsvorrichtung. Mit der Verringerung des Druckes sinkt auch die Temperatur des Prozessfluids. Das Prozessfluid hat also eine Insbesondere deutlich geringere Temperatur am Ausgang der Expansionsvorrichtung als am Eingang dieser.

Bevorzugt sind an den Prozesskreislauf ein Primärsystem und ein Sekundärsystem gekoppelt. Die Kopplung folgt dabei bevorzugt durch den ersten und/oder zweiten Wärmeübertrager. So können die Primärvorlaufleitung und Primärrücklaufleitung des Primärsystems durch den ersten Wärmeübertrager an den Prozesskreislauf gekoppelt sein. Analog können die Sekundärvorlaufleitung und Sekundärrücklaufleitung des Sekundärsystems durch den zweiten Wärmeübertrager an den Prozesskreislauf gekoppelt sein. Durch eine Primärpumpe des Primärsystems kann ein Primärlfuid durch die Primärvorlaufleitung und Primärrücklaufleitung gepumpt werden. Entsprechend kann durch eine Sekundärpumpe des Sekundärsystems ein Sekundärfluid durch die Sekundärvorlaufleitung und Sekundärrücklaufleitung gepumpt werden. Das Primärsystem kann ferner eine Umweltenergiequelle, wie beispielsweise eine Erdwärmesonde, einen Wärmekollektor und/oder eine Vorrichtung zur Nutzung der Energie des Grundwassers und/oder der Außenluft, aufweisen. Durch das Primärfluid kann eine Wärmeleistung der Umweltenergiequelle an den Prozesskreislauf beziehungsweise an das Prozessfluid übertragen werden. Dabei ist es von Vorteil, wenn das Prozessfluid und das Primärfluid in dem ersten Wärmeübertrager durch eine wärmedurchlässige Wand getrennt sind. Es ist also bevorzugt, dass der erste Wärmeübertrager ein indirekter Wärmeübertrager ist. Es ist aber auch möglich, dass der Wärmeübertrager ein direkter Wärmeübertrager oder ein halbdirekter Wärmeübertrager ist.

Das Sekundärsystem kann eine Energiesenke, insbesondere eine Wärmeenergiesenke oder mindestens einen Verbraucher, aufweisen. Ferner kann das Sekundärsystem eine Leitungsverbindung zwischen der Sekundärpumpe und/oder der Sekundärrückleitung und/oder -vorlaufleitung aufweisen. Durch den zweiten Wärmeübertrager kann eine Wärmeleistung des Prozessfluids an das Sekundärfluid übertragen werden. Diese Wärmeleistung kann sodann an die mindestens eine Wärmeenergiesenke des Sekundärsystems, insbesondere durch Fluileitungsverbindungen, übertragen werden. Abzuziehen von der übertragenen Wärmeleistung ist insbesondere die Verlustleistung, die sich insbesondere durch Wärmeverluste an den Leitungsverbindungen ergibt. Der zweite Wärmeübertrager zeichnet sich vorzugsweise dadurch aus, dass das Prozessfluid und das Sekundärfluid in dem zweiten Wärmeübertrager durch eine wärmedurchlässige Wand getrennt sind. Der zweite Wärmeübertrager ist vorzugsweise also ein indirekter Wärmeübertrager. Der zweite Wärmeübertrager kann jedoch auch ein direkter Wärmeübertrager oder ein halbindirekter Wärmeübertrager sein. Grundsätzlich können der erste und/oder zweite Wärmeübertrager im Gegenstrom, Gleichstrom oder Kreuzstrom betrieben sein.

Das erfindungsgemäße Verfahren zeichnet sich vorzugsweise auch dadurch aus, dass ein Regler eine Temperaturdifferenz des Primärfluids zwischen der Primärvorlaufleitung und der Primärrücklaufleitung (Primärregelgröße) durch ein Stellen der Primärpumpe regelt und/oder dass der Regler eine Temperaturdifferenz des Sekundärfluids zwischen der Sekundärvorlaufleitung und der Sekundärrücklaufleitung (Sekundärregelgröße) durch ein Stellen der Sekundärpumpe regelt. Die Primärregelgröße ist also die Differenz zwischen der Temperatur des Fluids in der Primärvorlaufleitung und der Temperatur des Fluids in der Primärrücklaufleitung. Analog ist die Sekundärregelgröße die Differenz zwischen der Temperatur des Fluids in der Sekundärvorlaufleitung und der Temperatur in der Sekundärrücklaufleitung.

Da sich die Temperaturen des Fluids in der Primärvorlaufleitung, Primärrücklaufleitung, Sekundärvorlaufleitung, Sekundärrücklaufleitung, primärseitigen Prozessvorlaufleitung, primärseitigen Prozessrücklaufleitung, sekundärseitigen Prozessvorlaufleitung und/oder sekundärseitigen Prozessrücklaufleitung kontinuierlich ändern, kann es vorgesehen sein, diese Temperaturen kontinuierlich zu messen und/oder die Temperaturdaten an den Regler zu übertragen. Es kann ferner vorgesehen sein, dass die gemessenen Temperaturdaten diskredisiert werden, zu diskreten Zeitpunkten gemessen werden und/oder als digitales Signal an den Regler übertragen werden. Alternativ kann es vorgesehen sein, dass die Primärregelgröße und/oder Sekundärregelgröße kontinuierlich und/oder zu diskreten Zeitpunkten gemessen und/oder an den Regler übertragen werden. Grundsätzlich können die Daten analog und/oder digital an den Regler übertragen werden.

Es ist besonders bevorzugt, dass der Regler die Primärpumpe und/oder die Sekundärpumpe regelt. Dazu kann der Regler die Primärpumpe und/oder die Sekundärpumpe stellen. Der Regler berechnet dazu mindestens eine Größe, insbesondere mindestens eine Stellgröße, mit der die Aktoren, insbesondere die Primärpumpe und/oder Sekundärpumpe, angesteuert werden.

Grundsätzlich können dem Regler auch Referenzgrößen, insbesondere eine Primärreferenzgröße und/oder eine Sekundärreferenzgröße, vorgegeben sein. Diese können beispielsweise von außen vorgebbare Referenzgrößen sein. Ferner können sie auch Größen sein, die dem Regler eingeprägt sind, so beispielsweise auf einem Speicher gespeichert sind. In einer bevorzugten Ausgestaltung vergleicht der Regler die Referenzgrößen mit den Regelgrößen und stellt die Pumpe in der Weise, dass eine Abweichung zwischen den zuvor genannten Größen möglichst klein ist beziehungsweise im Idealfall möglichst nicht auftritt.

Zur Erläuterung eines wesentlichen Vorteils der erfindungsgemäßen Verfahrens zur Regelung, die in einer thermodynamischen Anlage ausgeführt wird, sind die Wirkungsgrade der Wärmeübertrager zu berücksichtigen. Der reale Wirkungsgrad eines Wärmeübertrager ist vielfach durch zwei wesentliche Aspekte begrenzt. Erstens ist der Wirkungsgrad eines Wärmeübertrager sehr gering, wenn keine oder im Wesentlichen keine thermische Leistung übertragen werden kann. Dies ist insbesondere dann der Fall, wenn die mindestens zwei, in einen Wärmeübertrager eintretenden Fluidströme zumindest im Wesentlichen die gleiche Temperatur aufweisen Zweitens ist der Wirkungsgrad dann begrenzt, wenn der Wärmeübetrager nur eine begrenzte Wärmeaustauschfläche und/oder einen nur begrenzten Wärmeaustauschraum aufweist.

Begrenzt durch die zuvor genannten Aspekte weist ein Wärmeübertrager einen optimalen Betriebspunkt auf an dem der Wirkungsgrad am höchsten ist. Deiser Betriebspunkt kann ferner von weiteren Parametern abhängen. Diese Parameter können beispielsweise die Vor- und/oder Rücklauftemperaturen sein. Der optimale Betriebspunkt selbst kann insbesondere in diesem Sinne beispielsweise durch zwei Temperaturen gekennzeichnet sein. Dies kann einerseits die Temperatur des Fluids sein, die die Wärmeleistung zur Verfügung stellt, und andererseits die Temperatur des, insbesondere anderen, Fluids sein, an das die Wärmeleistung abgegeben werden soll. Da die Übertragung der Wärmeleistung nicht punktuell, sondern über eine gewisse Distanz erfolgt, sinkt die Temperatur des einen Fluides mit der Distanz ab und die Temperatur des anderen Fluides steigt mit der Distanz an. Um einen möglichst hohen Wirkungsgrad zu erreichen, ist es deshalb sinnvoll, zwei suboptimale Temperaturbereiche zu bestimmen, die die optimalen Temperaturen des Wärmetauschers umfassen.

Nun ist es aber denkbar, dass zumindest eine Seite des Wärmetauschers nicht mit dem suboptimalen Temperaturbereich betrieben werden kann. Es kann deshalb auch nicht sinnvoll sein, die andere Seite mit dem zuvor eingeführten und insofern festen, suboptimalen Temperaturbereich zu betreiben. Vielmehr gibt es eine funtionale Beziehung zwischen den suboptimalen Temperaturbereichen der beiden Seiten. Kann die eine Seite also nur mit einem bestimmten Temperaturbereich betrieben werden, so kann aus diesem "fixen" Temperaturbereich ein funktional abhängiger und/oder ein in diesem Sinne unter Berücksichtigung der, Insbesondere nicht optimalen, Randbedingungen suboptimale Temperaturbereich für die andere Seite bestimmt werden. Die suboptimalen Temperaturbereiche können also funktional voneinander abhängen und/oder jeweils abhängig voneinander berechnet werden.

Es ist deshalb besonders bevorzugt, dass der Regler die primäre Regelgröße durch ein Stellen der Primärpumpe regelt und/oder dass der Regler die Sekundärregelgröße durch ein Stellen der Sekundärpumpe regelt. Die Primärregelgröße als auch die Sekundärregelgröße beziehen sich vorzugsweise jeweils nur auf eine Seite eines Wärmetauschers.

Insbesondere unter den zuvor eingeführten Aspekten zu den Wirkungsgraden eines Wärmetauschers kann es sinnvoll sein, dass der Regler auch die Temperaturdifferenz des Fluides zwischen der Vor- und Rücklaufleitung auf der jeweiligen anderen Seite der entsprechenden Wärmetauscher regelt. Eine bevorzugten Ausgestaltung der Erfindung zeichnet sich deshalb dadurch aus, dass der erste Wärmetauscher prozesskreislaufseitig eine Vor- und Rücklaufleitung (primärseitige Prozessvorlaufleitung und primärseitige Prozessrücklaufleitung) aufweist und/oder der Regler eine Temperaturdifferenz des Prozessfluids zwischen der primärseitigen Prozessvorlaufleitung und der primärseitigen Prozessrücklaufleitung (primärseitige Prozessregelgröße) durch ein Stellen des Verdichters und/oder der Expansionsvorrichtung regelt. Ferner kann es besonders vorteilhaft sein, wenn der zweite Wärmetauscher prozesskreislaufseitig eine Vor- und Rücklaufleitung (sekundärseitige Prozessvorlaufleitung und sekundärseitige Prozessrücklaufleitung) aufweist und/oder der Regler eine Temperaturdifferenz des Prozessfluids zwischen der sekundärseitigen Prozessvorlaufleitung und der sekundärseitigen Prozessrücklaufleitung (sekundärseitige Prozessregelgröße) durch ein Stellen des Verdichters und/oder der Expansionsvorrichtung regelt.

Der Regler kann also in der Weise ausgestaltet sein, dass der Regler für den ersten Wärmeübertrager die Primärregelgröße und/oder die primärseitige Prozessregelgröße regelt. Sofern die Umweltbedingungen dieses zulassen, kann der Regler die Primärpumpe sowie den Verdichter und/oder die Expansionsvorrichtung in der Weise stellen, dass für beide Seiten des ersten Wärmetauschers suboptimale Temperaturdifferenzen des jeweiligen Fluides eingestellt sind. Mit anderen Worten kann der Regler die zuvor genannten Aktoren in der Weise stellen, dass der erste Wärmetauscher möglichst wirksam beziehungsweise möglichst optimal, insbesondere suboptimal, betrieben wird.

Analoge Überlegungen gelten für den zweiten Wärmeübertrager. Der Regler kann also in der Weise ausgestaltet sein, dass der Regler für den zweiten Wärmeübertrager die Sekundärregelgröße und/oder die sekundärseitige Prozessregelgröße regelt. Sofern die Umweltbedingungen dieses zulassen, kann der Regler die Sekundärpumpe sowie den Verdichter und/oder die Expansionsvorrichtung in der Weise stellen, dass für beide Seiten des zweiten Wärmetauschers suboptimale Temperaturdifferenzen des jeweiligen Fluides eingestellt sind. Mit anderen Worten kann der Regler die zuvor genannten Aktoren in der Weise stellen, dass der zweite Wärmetauscher möglichst wirksam beziehungsweise möglichst optimal, insbesondere suboptimal, betrieben wird.

Insbesondere für den Fall, dass der Verdichter und/oder die Expansionsvorrichtung durch den Regler nicht oder nur sehr eingeschränkt gestellt werden können und/oder weil es aus einem anderen Grund nicht vorgesehen ist, kann es für eine Ausgestaltung der Erfindung vorgesehen sein, dass der Regler die Primärregelgröße auch anhand der Temperatur des Fluids der primärseitigen Prozessvorlaufleitung und/oder anhand der Temperatur des Fluids der primärseitigen Prozessrücklaufleitung regelt. Analog kann es ebenfalls sinnvoll sein, wenn der Regler die Sekundärregelgröße auch anhand der Temperatur des Fluids der sekundärseitigen Prozessvorlaufleitung und/oder anhand der Temperatur des Fluids der sekundärseitigen Prozessrücklaufleitung regelt. Die beiden zuvor genannten Aspekte sind insbesondere deshalb sinnvoll, weil die Regelgrößen an die messbaren Temperaturdifferenzen, insbesondere möglichst wirkungsvoll und/oder suboptimal angepasst werden.

Es ist bevorzugt, dass der Regler die Primärregelgröße anhand einer einstellbaren und/oder vorgebbaren Differenztemperatursollgröße (Primärreferenzgröße), die Sekundärregelgröße anhand einer, insbesondere weiteren, einstellbaren und/oder vorgebbaren Differenztemperatursollgröβe (Sekundärreferenzgröße), die primärseitige Prozessregelgröße anhand einer insbesondere weiteren, einstellbaren und/oder vorgebbaren Differenztemperatursollgröße (primärseitige Prozessreferenzgröße) und/oder die sekundärseitige Prozessregelgröße anhand einer, insbesondere weiteren, einstellbaren und/oder vorgebbaren Differenztemperatursollgröße (sekundärseitige Prozessreferenzgröße) regelt. Dazu kann der Regler die Primärpumpe in der Weise stellen, dass die Primärregelgröße der Primärreferenzgröße nachgeführt wird, die Sekundärpumpe in der Weise stellen, dass die Sekundärregelgröße der Sekundärreferenzgröße nachgeführt wird, und/oder den Verdichter und/oder die Expansionsvorrichtung In der Weise stellen, dass die primärseitige Prozessregelgröße der primärseitigen Prozessreferenzgröße und/oder die sekundärseitige Prozessregelgröße der sekundärseitigen Prozessreferenzgröße nachgeführt werden. Als Regler eignet sich beispielsweise ein Regler mit proportionalem, integralem und/oder differenzierendem Verhalten.

Ferner kann es bevorzugt sein, dass die Referenzgrößen einstellbar sind. In einer einfachen Ausführung können die Referenzgrößen, insbesondere jeweils, mittels eines oder mehrerer Einstellräder einstellbar sein. Ferner kann es vorgesehen sein, dass der Regler eine Telemetrieeinheit aufweist, die zum Senden und/oder Empfangen von Informationen ausgestaltet ist, sodass insbesondere Referenzgrößen telemetrisch an den Regler übermittelbar sind und/oder vorzugsweise die Referenzgrößen mittels telemetrisch empfangener Daten einstellbar sind. Mit anderen Worten kann der Regler einen Eingang und/oder Eingangsklemmen aufweisen, der und/oder die dazu geeignet sind, Daten zu empfangen, die Referenzgrößen repräsentieren.

Insbesondere für Anlagen mit nur wenig schwankenden Fluidtemperaturen, aber auch für anderen Anlagen kann es sinnvoll sein, dass der Primärreferenzgröße und/oder der Sekundärreferenzgröße jeweils eine Differenztemperatur aus dem Bereich von 0,5 bis 20 Kelvin, insbesondere aus dem Bereich von 1 bis 12 Kelvin, vorzugsweise von 1, 2, 3, 4, 5, 6, 7, 8, 9, 10, 11 oder 12 Kelvin, und/oder der primärseitigen Prozessreferenzgröße und/oder der sekundärseitigen Prozessreferenzgröße jeweils eine Differenztemperatur aus einem Bereich von 0,5 bis 200 Kelvin, insbesondere aus dem Bereich von 1 bis 20 Kelvin, vorzugsweise 1, 2, 3, 4, 5, 6, 7, 8, 9, 10, 11, 12, 13, 14, 15, 16, 17, 18, 19 oder 20 Kelvin, zugewiesen wird. Jeweils denkbar sind auch kleinere Abstufungen, beispielsweise in 0,1 oder 0,25 Kelvinschritten zwischen 0,1 beziehungsweise 0,25 und 12 Kelvin, 20 Kelvin oder 200 Kelvin. So ist es beispielsweise bekannt, dass viele Standardwärmetauscher besonders wirksam betrieben werden können, wenn der Primärreferenzgröße 6,5 Kelvin und der Sekundärreferenzgröße 3 Kelvin zugewiesen werden. Mit den der Primär- beziehungsweise Sekundärreferenzgrößen zuvor genannten, zugewiesenen Differenztemperaturen kann es besonders vorteilhaft sein, wenn der Regler durch Stellen der Primärpumpe und/oder der Sekundärpumpe die Primärregelgröße auf 6,5 Kelvin regelt und/oder die Sekundärregelgröße auf 3 Kelvin regelt.

Je nach Einsatzgebiet und Art der thermodynamischen Anlage können die Referenzgrößen auch dynamische Größen sein und/oder funktional von verschiedenen Randbedingungen und/oder äußeren und/oder konstruktiven Parametern abhängen. Es ist deshalb sinnvoll, wenn das Verfahren zur Regelung die in einer thermodynamischen Anlage ausgeführt wird auch bei sich ändernden Umgebungsverhältnissen besonders wirksam ist. Das Verfahren ist insbesondere dann besonders wirksam, wenn der erste und/oder zweite Wärmeübertrager und/oder die thermodynamische Anlage mit einem möglichst hohen Wirkungsgrad betrieben wird. Eine besonders vorteilhafte Ausgestaltung der Erfindung kennzeichnet sich deshalb dadurch, dass die Primärreferenzgröße, Sekundärreferenzgröße, primärseitige Prozessreferenzgröße und/oder sekundärseitige Prozessreferenzgröße aus einem Datenfeld, dass das Primärreferenzgrößen, Sekundärreferenzgrößen, primärseitige Prozessreferenzgrößen, sekundärseitige Prozessreferenzgrößen, Wirkungsgrade, Temperaturen des Fluids der Primärvorlaufleitung, Primärrücklaufleitung, Sekundärvortaufleitung, Sekundärrücklaufleitung, primärseitigen Prozessvorlaufleitung, primärseitigen Prozessrücklaufleitung, sekundärseitigen Prozessvorlaufleitung und/oder sekundärseitigen Prozessrücklaufleitung zueinander tabelliert, ermittelt wird, sodass der zugehörige Wirkungsgrad möglichst hoch ist. Ein Datenkennfeld, das mehrere Größen zueinander tabelliert, impliziert, dass dazu Werte der Größen zueinander tabelliert sind. So können beispielsweise die Temperaturen des Fluids der Primärvorlaufleitung aus dem Kennfeld durch Temperaturen von -50°C bis +200°C, vorzugsweise in 0,1 °C-Schritten, repräsentiert sein. Jede der Größen aus dem Kennfeld kann und/oder sollte durch die gleiche Anzahl der Werte repräsentiert sein. Die Werte sind jedoch nicht begrenzt. So könnte beispielsweise die Temperaturen des Fluids der Sekundärvorlaufleitung durch Temperaturen von -20°C bis +300°C repräsentiert sein. Damit einander zugehörige Daten aus dem Datenfeld möglichst einfach einander zugeordnet sein können, ist es besonders sinnvoll, wenn jede der Größen durch die gleiche Anzahl von Werten repräsentiert ist. Insbesondere für die anfänglich genannte Aufzählung ist also jede Größe des Datenkennfeldes durch die gleiche Anzahl der Werte, hier also 2501 Werte, in dem Datenkennfeld gespeichert und so vorzugsweise auch durch sie repräsentiert. Sollte eine Auflösung eines Kennfeldes und/oder einer Größe nicht reichen, so ist es ebenfalls möglich, dass Zwischenwerten aus den Werten der Größen des Kennfeldes interpoliert werden und/oder weitere Werte der Größen extrapoliert werden. Das Kennfeld bildet also vorzugsweise ab, wie charakteristische Größen der thermodynamischen Anlage, insbesondere die Referenzgrößen und die Temperaturen eines Fluides in den Vor- und/oder Rücklaufleitungen, insbesondere funktionell, miteinander verknüpft sind. Unter dem zugehörigen Wirkungsgrad kann jener Wirkungsgrad aus dem Kennfeld verstanden werden, der zu dem ermittelten Wert der jeweiligen Referenzgröße durch das Datenkennfeld zugeordnet ist. Die Zuordnung kann vorzugsweise eine tabellarische Verknüpfung sein. Die jeweiligen Referenzgrößen, also die Primärreferenzgröße, Sekundärreferenzgröße, primärseitige Prozessreferenzgröße oder sekundärseitige Prozessreferenzgröße, können separat und vorzugsweise nacheinander und/oder parallel aus dem Datenkennfeld ermittelt werden. Alternativ können auch mehrere Datenkennfelder, insbesondere jeweils ein Datenkennfeld für eine Referenzgröße, vorgesehen sein.

Die Ermittlung einer der Referenzgrößen, insbesondere der Primärreferenzgröße, Sekundärreferenzgröße, primärseitigen Prozessreferenzgröße oder sekundärseitigen Referenzgröße, aus dem Datenkennfeld erfolgt vorzugsweise durch Verringerung der Freiheitsgrade des Datenkennfeldes. So kann beispielsweise das Datenkennfeld um einen Freiheitsgrad verringert werden, in dem eine Größe des Datenkennfeldes, beispielsweise der Temperatur des Fluids der Primärvorlaufleitung, ein fester und/oder gemessener Wert zugeordnet wird. Ferner kann vorgesehen sein, dass bis alle Referenzgrößen bis auf die zu ermittelnde Referenzgröße bei der Ermittlung unberücksichtigt bleibt. Eine Möglichkeit zur Ermittlung einer der Referenzgrößen, insbesondere der Primärreferenzgröße, Sekundärreferenzgröße, primärseitigen Prozessreferenzgröße oder sekundärseitigen Prozessreferenzgröße, aus dem Datenkennfeld kann dadurch gekennzeichnet sein, dass alle Größen des Datenkennfeldes bis auf die zu ermittelnde Referenzgröße, den Wirkungsgrad und die optional außer Acht zu lassenden anderen Referenzgrößen durch einen bestimmten und/oder gemessenen Wert festgelegt sind und/oder die zu ermittelnde Referenzgröße dann in der Weise ausgewählt wird, dass der zugehörige Wirkungsgrad möglichst hoch ist.

Ferner ist es bevorzugt, dass die Ermittlung insbesondere einer der Referenzgrößen, insbesondere die Primärreferenzgröße, Sekundärreferenzgröße, primärseitige

Prozessreferenzgröße oder sekundärseitige Prozessreferenzgröße, folgende Schritte umfasst:
Der erste Schritt kann ein Messen der Temperatur des Fluids der Primärvorlaufleitung, Primärrücklaufleitung, Sekundärvorlaufleitung, Sekundärrücklaufleitung, primärseitigen Prozessvorlaufleitung, primärseitigen Prozessrücklaufleitung, primärseitigen Prozessvorlaufleitung und/oder sekundärseitigen Prozessrücklaufleitung sein. Das Messen kann mit bekannten Messvorrichtungen aus dem Stand der Technik erfolgen. Dies können insbesondere Temperatursensoren im oder an den entsprechenden Leitungen sein. Zwischen dem Regler und den Messvorrichtungen können jeweils Leitungsverbindungen ausgestaltet sein. Ferner können die Messvorrichtungen gruppenweise, insbesondere die Messvorrichtungen des Primärsystems, Sekundärsystems und/oder des Prozesskreislaufes, durch Leitungsverbindungen mit einer, insbesondere separaten, Recheneinheiten verbunden sein, die die entsprechenden Regelgrößen berechnet und/oder diese durch weitere Leitungsverbindungen an den Regler übertragen kann.

Ein nachfolgender zweiter Schritt kann ein Ermitteln eines Referenzkennfeldes (das insbesondere auch zweidimensional sein kann), das mindestens eine der Referenzgrößen, insbesondere die Primärreferenzgröße, Sekundärreferenzgröße, primärseitige Prozessreferenzgröße und/oder sekundärseitige Prozessreferenzgröße, Wirkungsgrade zuordnet, aus dem Datenkennfeld, wobei die Temperaturen des Fluides der Primärvorlaufleitung, Primärrücklaufleitung, Sekundärvorlaufleitung, Sekundärrücklaufleitung, primärseitigen Prozessvorlaufleitung, primärseitigen Prozessrücklaufleitung, sekundärseitigen Prozessvorlaufleitung und/oder sekundärseitigen Prozessrücklaufleitungen mit ihren gemessenen Werten festgelegt werden.

Mathematisch spannt das Datenkennfeld einen wenn auch begrenzten, mehrdimensionalen Raum auf. Je nach Anzahl der Größen des Datenkennfeldes kann dieser Raum auch mehrere, beispielsweise 5, 6, 7, 8 oder mehr, Dimensionen aufweisen. Sind nun aber mehrere dieser Größen durch ihre gemessenen Werte festgelegt, kann die Dimension des Datenkennfeldes um jeweils eine Dimension mit jedem gemessenen Wert reduziert werden. Werden beispielsweise alle bis auf zwei Größen des Datenkennfeldes durch ihre gemessenen Werte festgelegt, so handelt es sich im mathematischen Sinne um einen zweidimensionalen Raum, der für den hier bevorzugten Fall durch eine der Referenzgrößen, also insbesondere die Primärreferenzgröße, Sekundärreferenzgröße, primärseitige Referenzgröße oder sekundärseitige Prozessgröße, und den Wirkungsgrad aufgespannt ist. Funktionell können die Werte der einen Referenzgröße und des Wirkungsgrades durch eine (zweidimensionale) Kennlinie miteinander verknüpft sein. In diesem Sinne ist es bevorzugt, dass jedem Wert der einen Referenzgröße ein Wert des Wirkungsgrades zugeordnet ist. Alternativ ist jedoch auch denkbar, dass alle bis auf die Referenzgrößen durch ihre gemessenen Werte festgelegt sind. Im mathematischen Sinne handelt es sich dann noch immer um einen mehrdimensionalen Raum. Auch dieser Raum kann ein globales Maximum für den Wirkungsgrad aufweisen. Durch diesen Punkt können alle Referenzgrößen festgelegt sein.

Der dritte bevorzugte Schritt kann ein Ermitteln des maximalen Wirkungsgrades aus dem Referenzkennfeld und der zugehörigen Referenzgröße und/oder der zugehörigen Referenzgrößen sein. Bereits zuvor wurde erläutert, dass der Wirkungsgrad im mathematischen Sinne eine Funktion der Referenzgrößen sein kann. Aus dem Stand der Technik bekannt sind Verfahren zur Ermittlung eines solchen Maximums. Insbesondere können dies numerische Verfahren, bevorzugt nach einer Gradientenmethode, sein. Ist der maximale Wirkungsgrad ermittelt, so kann auch der dazu entsprechende Wert der zu ermittelnden Referenzgröße oder der dazu entsprechenden Werte der Referenzgrößen aus dem Referenzkennfeld ermitteit werden.

Das Ermitteln des Referenzkennfeldes und/oder des Wirkungsgrades und/oder der zugehörigen Referenzgrößen kann mittels einer Recheneinheit erfolgen. Die Recheneinheit kann dazu eine Recheneinheit der thermodynamischen Anlage sein. Ferner kann die Recheneinheit auch eine Einheit des Reglers sein. Außerdem weist die Recheneinheit bevorzugt einen Speicher auf. Der Speicher kann dazu geeignet sein, die Kennfelder, insbesondere das Datenkennfeld und/oder das Referenzkennfeld, zu speichern.

Da es sich bei den gemessenen Größen, also insbesondere bei den gemessenen Temperaturen der Fluide der Primärvorlaufleitung, Primärrücklaufleitung, Sekundärvorlaufleitung, Sekundärrücklaufleitung, primärseitigen Prozessvorlaufleitung, primärseitigen Prozessrücklaufleitung, sekundärseitigen Prozessvorlaufleitung und/oder sekundärseitigen Prozessrücklaufleitung, um dynamische Größen, also insbesondere um Größen, die sich mit der Zeit ändern, handelt, ist es von Vorteil, wenn sich die Referenzgrößen an diese dynamischen Änderungen anpassen. Eine bevorzugte Ausgestaltung der Erfindung zeichnet sich insbesondere deswegen dadurch aus, dass während des Betriebes die Ermittlung der Referenzgrößen, insbesondere der Primärreferenzgröße, Sekundärreferenzgröße, primärseitigen Prozessreferenzgröße und/oder sekundärseitigen Prozessreferenzgröße, wiederholt durchgeführt wird. Die Wiederholung kann vorzugsweise mit einer festen Abtastzeit wiederholt werden. Vorzugsweise ist die Ermittlung der Referenzgrößen mit der Ermittlung, vorzugsweise mit der Abtastzeit der Ermittlung, der Messgrößen synchronisiert.

Für eine besonders bevorzugte Ausgestaltung ist das Verfahren zur Regelung dadurch gekennzeichnet, dass der Regler aus der Differenz aus der Primärreferenzgröße und der Primärregelgröße (Primärregelfehler) eine Primärstellgröße ermittelt, wobei die Primärstellgröße vorzugsweise eine Steuergröße der Primärpumpe ist, aus der Differenz der Sekundärreferenzgröße und der Sekundärregelgröße (Sekundärregelfehler) eine Sekundärstellgröße ermittelt, wobei die Sekundärstellgröße vorzugsweise eine Stellgröße der Sekundärpumpe ist, aus der Differenz aus der primärseitigen Prozessreferenzgröße und der primärseitigen Prozessregelgröße (primärseitiger Prozessregelfehler) mindestens eine primärseitige Prozessstellgröße ermittelt und/oder aus der Differenz aus der sekundärseitigen Prozessreferenzgröße und der sekundärseitigen Prozessregelgröße (sekundärseitiger Prozessregelfehler) mindestens eine sekundärseitige Prozessstellgröße ermittelt, wobei die mindestens eine primär- und oder sekundärseitige Prozessstellgröße vorzugsweise eine Steuergröße des Verdichters und/oder eine Stellgröße der Expansionsvorrichtung ist. Die Ermittlung einer Stellgröße aus der Differenz einer Referenzgröße und einer Regelgröße soll exemplarisch für das Primärsystem verdeutlicht werden. Ist die Primärreferenzgröße beispielsweise 6,5 Kelvin und die Primärregelgröße 2 Kelvin, so ist der primäre Regelfehler 4,5 Kelvin. Der Regler ermittelt dann aus dem Primärregelfehler die Primärstellgröße. Hat der Regler beispielsweise ein proportionales Übertragungsverhalten, insbesondere von dem Primärregelfehler zu der Primärstellgröße, so kann der Regler aus dem zuvor genannten Primärregelfehler von 4,5 Kelvin eine Primärstellgröße von beispielsweise 180 Volt ermitteln. Die 180 Volt der Primärstellgröße könnten somit eine Stellgröße der Primärpumpe sein, nämlich die Spannungsversorgung der Primärpumpe. Die soeben genannten Überlegungen für das Primärsystem gelten analog auch für das Sekundärsystem und/oder für den primärseitigen und/oder sekundärseitigen Prozesskreislauf.

Für eine weitere bevorzugte Ausgestaltung kann der Regler ein proportionales, integrales und/oder differenzierendes Übertragungsverhalten von zumindest einem der Regelfehler, insbesondere dem Primärregelfehler, Sekundärregelfehler, primärseitigen Prozessregelfehler und/oder sekundärseitigen Prozessregelfehler, zu zumindest einer der Stellgrößen, insbesondere Primärstellgröße, Sekundärstellgröße, primärseitige Prozessstellgröße und/oder sekundärseitige Prozessstellgröße, aufwelsen. Der Regler kann vorzugsweise auch ein Mehrgrößenregler sein. Ferner wird das Übertragungsverhalten solcher Regler im Stand der Technik vorzugsweise auch als P-, I- und oder D-Regler und/oder mit einer Kombination der zuvor genannten Buchstaben, beispielsweise PI-, PD- und/oder PID-Regler, bezeichnet. Möglich sind jedoch auch andere Reglerarten, insbesondere denkbar ist der Einsatz von Reglern mit linearer Rückführung, wie beispielsweise die Zustands- und/oder Ausgangsrückführung, und/oder nicht lineare Regler, wie beispielsweise adaptive Regler und/oder Fuzzy-Regler.

Grundsätzlich denkbar Ist, dass für jede Stellgröße und/oder für alle Stellgrößen gemeinsam mindestens eine Vorrichtung vorgesehen sein kann, die die Stellgrößen zu einer angepassten Steuergröße des jeweiligen Aktuators transformiert. Als Steuergröße der Primärpumpe beziehungsweise der Sekundärpumpe und/oder die Primärstellgröße beziehungsweise Sekundärstellgröße eignen sich insbesondere die Drehzahl, die Leistung, die Förderleistung, der Druck und/oder der Rotorflügelwinkel der Primärpumpe bezlehungsweise der Sekundärpumpe oder eine zu zumindest einer der Größen im Wesentlichen proportionalen und/oder von mindestens einer der Größen im Wesentlichen funktional abhängigen Größe. Eine weitere vorteilhafte Ausgestaltung der Erfindung ist dadurch gekennzeichnet, dass die Steuergröße der Primärpumpe beziehungsweise der Sekundärpumpe und/oder die Primärstellgröße beziehungsweise Sekundärstellgröße die Spannung, der Strom, die Frequenz, die Pulsfrequenz, die Pulsbreite und/oder eine sonstige Größe eines elektrischen Motors der Primärpumpe beziehungsweise Sekundärpumpe oder eine zu zumindest einer der Größen im Wesentlichen proportionalen und/oder von mindestens einer der Größen im Wesentlichen funktional abhängigen Größe ist.

Je nach Arbeitsweise des Prozesskreislaufes kommen verschiedene Wärmeübertrager, Verdichter und/oder Expansionsventile in Betracht. Insbesondere wenn kein Fluidaustausch zwischen dem Prozesskreislauf und dem ersten und/oder zweiten System stattfinden soll, kann es sinnvoll sein, dass das Prozessfluid und das Primärfluid in dem ersten Wärmeübertrager und/oder das Prozessfluid und das Sekundärfluid in dem zweiten Wärmeübertrager vorzugsweise jeweils durch eine wärmedurchlässige Wand getrennt sind. Eine solche wärmedurchlässige Wand kann sich vorzugsweise dadurch auszeichnen, dass sie einen hohen spezifischen Wärmeleitungsgrad aufweist. Mögliche Verdichterbauformen sind beispielsweise ein Kolbenverdichter, Schraubenverdichter oder Turboverdichter. Mögliche Expansionsvorrichtungen sind beispielsweise Expansionsventile, Drosseln und/oder weniger bevorzugt Turbinen.

Der Prozesskreislauf kann grundsätzlich mit einem beliebigen Fluid betrieben werden. Das Fluid kann dazu flüssig oder gasförmig sein. Insbesondere kann das Fluid in dem Prozesskreislauf seinen Aggregatzustand ändern. Als Fluide kommen beispielsweise flüssige Fluide wie Wasser oder Öl in Betracht..

Erfindungsgemäß zeichnet sich die Erfindung auch durch eine Vorrichtung zur Regelung einer thermodynamischen Anlage mit einem Prozesskreislauf, der einen ersten Wärmeübertrager, einen Verdichter, einen zweiten Wärmeübertrager und eine Expansionsvorrichtung aufweist und der von einem Prozessfluid durchflossen ist, einer Primärvorlaufleitung und Primärrücklaufleitung eines Primärsystems, die durch den ersten Wärmeübertrager mit dem Prozesskreislauf gekoppelt sind, einer Primärpumpe des Primärsystems, durch die ein, insbesondere weiteres, Primärfluid durch die Primärvorlaufleitung und Primärrücklaufleitung pumpbar ist, einer Sekundärvorlaufleitung und Sekundärrücklaufleitung eines zweiten Sekundärsystems, die durch den zweiten Wärmeübertrager mit dem Prozesskreislauf gekoppelt sind, und einer Sekundärpumpe des Sekundärsystems, durch die ein, insbesondere weiteres, Sekundärfluid durch die Sekundärvorlaufleitung und Sekundärrücklaufleitung pumpbar ist, dadurch aus, dass Leitungsverbindungen zwischen mindestens einem der Temperatursensoren der Primärvorlaufleitung, Primärrücklaufleitung, Sekundärvorlaufleitung und/oder Sekundärrücklaufleitung und dem Regler sowie dem Regler und der Primärpumpe und/oder Sekundärpumpe ausgebildet sind.

Es kann ferner bevorzugt sein, dass Leitungsverbindungen zwischen dem Regler und mindestens einem der Temperatursensoren der primärseitigen Prozessvorlaufleitung, primärseitigen Prozessrücklaufleitung, sekundärseitigen Prozessvorlaufleitung und/oder sekundärseitigen Prozessrücklaufleitung und/oder zwischen dem Regler und dem Verdichter und/oder der Expansionsvorrichtung ausgebildet sind. Die Leitungsverbindungen können direkt und/oder indirekt Verbindungen sein. Ferner können unter den Leitungsverbindungen auch Funk- und/oder telemetrische Leitungsverbindungen verstanden werden. Die Regler, die Sensoren und/oder die Aktuatoren können dazu einen Sender und/oder Empfänger aufweisen, die dazu geeignet sind, Signale telemetrisch und/oder mittels elektromagnetischer Wellen zu senden und/oder zu empfangen. Die Leitungsverbindung kann ferner dadurch gekennzeichnet sein, dass sie von einer Signaldatenverarbeitungseinheit unterbrochen ist. Diese Datensignalverarbeitungseinheit kann vorzugsweise dadurch gekennzeichnet sein, dass sie die Signalstärke der jeweiligen Signale, insbesondere die Leistung der Eingangssignale, verstärkt.

Eine wesentliche Aufgabe der Temperatursensoren ist es, die Temperatur des Fluids in den Vorlaufleitungen beziehungsweise in den Rücklaufleitungen zu messen und/oder die gemessenen Informationen in geeignete Signale umzuwandeln. Je nach Messmethode, Messintervall und/oder Messhäufigkeit können die Signale der Sensoren durch Signalleitungsverbindungen an den Regler übermittelt werden. Der Regler kann dazu vorzugsweise eine Signalempfangseinheit aufweisen. Ferner kann der Regler dazu eine Signaldatenverarbeitungseinheit und/oder eine Recheneinheit aufweisen, um aus den Eingangsgrößen eine Stellgröße zu ermitteln. Die ermittelten Stellsignale können durch eine Leitungsverbindung an eine Pumpe, einen Verdichter und/oder eine Expansionsvorrichtung übermittelt werden. Sofern der Eingang der Pumpe ein Stelleingang der Pumpe ist, kann der Regler den Zustand der Pumpe verändern. Es ist insofern bevorzugt, dass sich der Regler in einem geschlossenen Regelkreis mit den Sensoren, den Leitungsverbindungen und den Aktuatoren, also der Primärpumpe, Sekundärpumpe, Verdichter und/oder Expansionsvorrichtung, befindet.

Eine weitere bevorzugte Ausgestaltung der Vorrichtung zeichnet sich dadurch aus, dass der Regler ein Datenkennfeld und eine Recheneinheit zur Ermittlung der Referenzgrößen aufweist. Der Regler kann dazu ferner eine Speichereinheit aufweisen, die das Datenkennfeld und/oder das Referenzkennfeld speichert. Dazu können Recheneinheit und/oder das Kennfeld und/oder der Speicher durch Signalleitungsverbindungen miteinander verbunden sein, sodass die Recheneinheit auf den Speicher beziehungsweise auf dessen Inhalt, insbesondere auf das Datenkennfeld und/oder Referenzkennfeld, Zugriff hat. Ferner kann es bevorzugt sein, dass die Recheneinheit dazu ausgestaltet ist und/oder geeignet ist, den Vergleich zwischen den Referenzgrößen und den entsprechenden Messgrößen auszuführen und/oder vorzugsweise einen Regelfehler zu ermitteln.

### Bezugszeichen:

- 2: thermodynamische Anlage
- 3: Prozesssystem
- 4: Prozesskreislauf
- 6: Primärsystem
- 8: Sekundärsystem
- 10: Verdichter
- 12: sekundärseitige Prozessvorlaufleitung
- 14: zweiter Wärmeübertrager
- 16: sekundärseitige Prozessrücklaufleitung
- 18: Expansionsvorrichtung
- 20: primärseitige Prozessvorlaufleitung
- 22: erster Wärmeübertrager
- 24: primärseitige Prozessrücklaufleitung
- 26: Primärvorlaufleitung
- 28: Primärrücklaufleitung
- 30: Primärpumpe
- 32: Sekundärvorlaufleitung
- 34: Sekundärrücklaufleitung
- 36: Sekundärpumpe
- 38: Primärvorlauftemperatursensor
- 40: Primärrücklauftemperatursensor
- 42: Sekundärvorlauftemperatursensor
- 44: Sekundärrücklauftemperatursensor
- 46: primärseitiger Prozessvorlauftemperatursensor
- 48: primärseitiger Prozessrücklauftemperatursensor
- 50: sekundärseitiger Prozessvorlaufleitungtemperatursensor
- 52: sekundärseitiger Pozessrücklaufleitungtemperatursensor
- 54: Primärpumpenstelleingang
- 56: Sekundärpumpenstelleingang
- 58: Verdichterstelleingang
- 60: Expansionsvornchtungsstelleingang
- 61: Regelkreis
- 62: Regler
- 64: maximaler Wirkungsgrad aus dem Referenzdatenfeld
- 66: Refernzdatenkennfeld

### Ausführungsbeispiele:

Weitere Einzelheiten, Vorteile und Merkmale der Erfindung gehen aus der nachfolgenden Beschreibung der Figuren hervor. Dabei zeigen:
- Figur 1: eine schematische Darstellung einer thermodynamischen Anlage mit einem Prozesskreislauf, einem Primärsystem und einem Sekundärsystem,
- Figur 2: eine schematische Darstellung eines Regelkreises für die thermodynamische Anlage und
- Figur 3: eine graphische Darstellung eines Referenzdatenkennfeldes für das Verfahren und/oder die Vorrichtung zur Regelung.

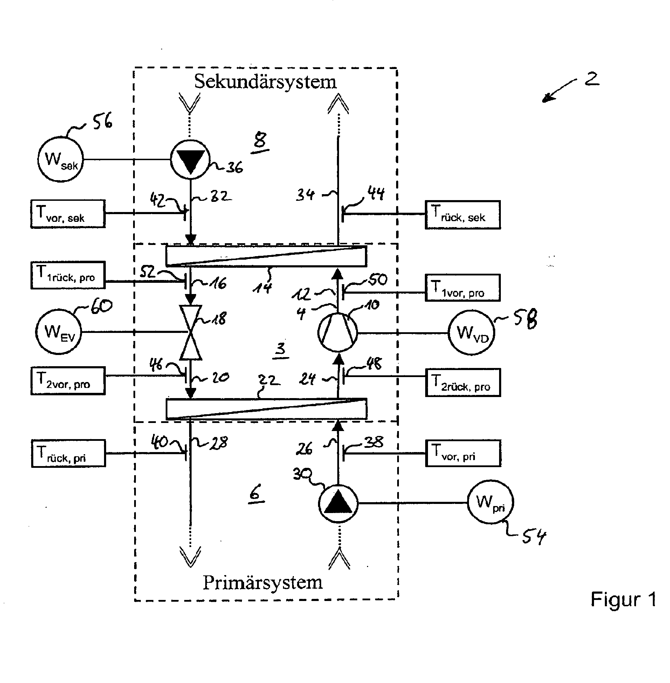

Figur 1 zeigt eine schematische Darstellung einer thermodynamischen Anlage 2 mit einem Prozesssystem 3, einem Primärsystem 6 und einem Sekundärsystem 8. Der Prozesskreislauf 4 des Prozesssystems 3 ist dabei von einem Prozessfluid durchflossen. Der Fluss selbst des Prozessfluids ist durch den Verdichter 10 verursacht. Durch die sekundärseitige Prozessvorlaufleitung 12 ist der Ausgang des Verdichters 10 mit dem Eingang des zweiten Wärmeübertragers 14 verbunden. Durch die sekundärseitige Prozessrücklaufleitung 16 ist der erste Wärmeübertrager 14 mit der Expansionsvorrichtung 18 verbunden. Die Expansionsvorrichtung 18 ist wiederum durch die primärseitige Prozessvorlaufleitung 20 mit dem ersten Wärmeübertrager 22 verbunden, der durch die primärseitige Prozessrücklaufleitung 24 mit dem Verdichter 10 verbunden ist. Die sekundärseitige Prozessvorlaufleitung 12, die sekundärseitige Prozessrücklaufleitung 16, die primärseitige Prozessvorlaufleitung 20 und/oder die primärseitige Prozessrücklaufleitung 24 können jeweils eine Rohrleitung, ein Rohrleitungssystem, ein ähnlich gestaltetes Bauteil und/oder geartete Baugruppe sein. Auch ist es möglich, dass sie jeweils von weiteren Bauteilen und/oder Baugruppen unterbrochen sind.

Durch die soeben eingeführte Verkopplung des Verdichters 10, des ersten Wärmeübertragers 22, der Expansionsvorrichtung 18 und des zweiten Wärmeübertragers 14 durch die entsprechenden Leitungen ist es möglich, dass das Prozessfluid in einem Kreislauf, nämlich dem Prozesskreislauf 4, fließt. Der Verdichter kann durch einen elektrischen Motor oder durch eine anders geartete mechanische Leistungsversorgung angetrieben sein. Ferner ist es möglich, dass der Verdichter 10 zumindest zum Teil durch die Expansionsvorrichtung 18 angetrieben wird. Dies ist insbesondere dann möglich, wenn die Expansionsvorrichtung 18 nach Art einer Turbine ausgestaltet sein. Zwischen der Expansionsvorrichtung 18 und dem Verdichter 10 könnte sodann eine mechanische Wellenverbindung ausgestaltet sein. Diese könnte gegebenenfalls durch einen Getriebeübersetzung und/oder Kupplung unterbrochen sein.

Das Primärsystem 6 ist im Wesentlichen abstrakt dargestellt. Neben der Primärvorlaufleitung 26, die die Primärpumpe 30 mit dem ersten Wärmeübertrager 22 verbindet und der Primärrücklaufleitung 28, die zumindest auch mit dem ersten Wärmeübertrager 22 verbunden ist, kann das Primärsystem 6 noch weitere Bauelemente aufweisen. Insbesondere kann das Primärsystem 6 ein Leitungssystem aufweisen, das thermische Energie einer Umweltenergiequelle aufnehmen und/oder transportieren kann. So kann das Primärsystem 6 beispielsweise eine Erdwärmesonde, einen Wärmekollektor, eine Leitungsverbindung zu einem Grundwasserspeicher und/oder zu einem anderen Wärmetauscher aufweisen.

Das Sekundärsystem 8 ist im Wesentlichen auch abstrakt dargestellt. Hierbei ist die Sekundärpumpe 36 durch eine Sekundärvorlaufleitung 32 mit dem zweiten Wärmeübertrager 14 verbunden. Ferner ist die Sekundärrücklaufleitung 34 mit dem zweiten Wärmeübertrager 14 verbunden. Des Weiteren kann das Sekundärsystem 8 weitere Bauelemente oder Gruppen aufweisen. Diese können eine Heizung und/oder Bauelemente einer Heizung sein. Grundsätzlich ist das Sekundärsystem 8 ein System, das Wärmenergie aufnehmen kann. Hingegen ist das Primärsystem 6ein System, das Wärmeenergie abgibt. Grundsätzlich wird also Wärmeenergie vom Primärsystem 6 an das Sekundärsystem 8 übertragen. Um diese Übertragung zu ermöglichen, wird durch den Prozesskreislauf 4 die nutzbare Temperatur erhöht, sodass eine Wärmeübertragung an das Sekundärsystem 8 ermöglicht wird. Grundsätzlich sind aus dem Stand der Technik verschiedene Bauformen von Wärmeübertragung bekannt. Diese können beispielsweise direkte, indirekte oder halbdirekte Wärmeübertrager sein. Für die hier dargestellte thermodynamische Anlage und für die Erfindung im Allgemeinen ist es bevorzugt, dass das Prozessfluid und das Primärfluid des Primärsystems 6 in dem ersten Wärmeübertrager 22 durch eine wärmedurchlässige Wand getrennt sind. Ferner ist es bevorzugt, dass das Prozessfluid und das Sekundärfluid des Sekundärsystems 8 in dem zweiten Wärmeübertrager 14 durch eine wärmedurchlässige Wand getrennt sind. Es ist also bevorzugt, dass der erste und/oder der zweite Wärmeübertrager jeweils ein indirekter Wärmeübertrager ist. Auf diese Weise wird es ermöglicht, dass die Stoffströme, nämlich das Prozessfluid, das Primärfluid und/oder das Sekundärfluid, stofflich voneinander getrennt sind.

Angetrieben durch die Primärpumpe 30 wird das Primärfluid durch die Primärvorlaufleitung 26 In den ersten Wärmeübertrager 22 gepumpt beziehungsweise durch diesen hindurch in die Primärrücklaufleitung 28 gepumpt. Vorzugsweise durch eine wärmedurchlässige Wand getrennt durchfließt das Prozessfluid ebenfalls, beispielsweise auf einer anderen Seite des ersten Wärmeübertragers 22, den ersten Wärmeübertrager 22. Das Primärfluid und das Prozessfluid können also gleichzeitig den ersten Wärmeübertrager durchfließen. Dabei findet eine thermische Leistungsübertragung von dem Primärfluid an das Prozessfluid statt. Die Temperatur des Prozessfluids steigt also während des Durchfließens des ersten Wärmeübertragers 22. Hingegen sinkt die Temperatur des Primärfluids während es durch den Wärmetauscher 22 fließt. Durch den Verdichter 10 wird das nunmehr erwärmte Prozessfluid zu dem zweiten Wärmeübertrager 14 gepumpt. Der Verdichter 10 kann beispielsweise ein Kolbenverdichter, Schraubenverdichter oder Turboverdichter sein. Durch den Verdichter 10 wird der Druck In dem Prozesskreislauf zwischen Verdichter 10 und Expansionsventil 18, Insbesondere deutlich, erhöht. Dadurch steigt die Temperatur des Prozessfluid ein weiteres Mal. Zusammenfassend wird das Prozessfluid verursacht durch den ersten Wärmeübertrager 22 sowie durch den Verdichter 10 erwärmt. Insbesondere in und/oder nach dem Verdichter kann das Prozessfluid den Aggregatzustand verändern. Das Prozessfluid kann also den gasförmigen Aggregatzustand annehmen. Der zweite Wärmeübertrager 14 kann analog zu dem ersten Wärmeübertrager 22 aufgebaut sein. Er kann somit insbesondere gleichzeitig von dem Prozessfluid als auch von dem Sekundärfluid durchflossen sein. Das Sekundärsystem 8 ist durch die Sekundärvorlaufleitung 32 und durch die Sekundärrücklaufleitung 34 mit dem zweiten Wärmeübertrager 14 verbunden. Auf der anderen Seite ist der zweite Wärmeübertrager 14 mit der sekundärseitigen Prozessvorlaufleitung 12 und mit der sekundärseitigen Prozessrücklaufleitung 16 verbunden. Es ist bevorzugt, dass In dem zweiten Wärmeübertrager 14 das Sekundärfluid eine geringere Temperatur aufweist als das Prozessfluid. Auf diese Weise kann eine thermische Leistungsübertragung von dem Prozessfluid auf das Sekundärfluid erfolgen. Dazu weist der zweite Wärmeübertrager 14 bevorzugt eine wärmedurchlässige Wand auf.

Grundsätzlich kann die thermodynamische Anlage 2 also eine Wärmepumpe oder eine Kältemaschine sein. Es kann ferner bevorzugt sein, dass der erste Wärmeübertrager ein Erhitzer und/oder Verdampfer ist. Ferner kann es bevorzugt sein, dass der zweite Wärmeübertrager ein Kühler, Kondensator und/oder Verflüssiger ist. Die Expansionsvorrichtung kann vorzugsweise ein Expansionsventil sein. Der Verdichter kann vorzugsweise ein Kompressor sein.

Damit der Regler die Temperaturdifferenz zwischen den entsprechenden Vor- und Rücklaufleitungen regeln kann, weist die thermodynamische Anlage 2 mehrere Temperatursensoren auf. In ihrer Bauart und/oder Form kann jeder dieser Sensoren in der Weise ausgestaltet sein, dass der jeweilige Sensor mehrere Größen messen kann. Dieses kann insbesondere eine Temperatur, ein Druck und/oder ein Volumenstrom sein. Auch wenn es nicht für jeden der folgenden Sensoren explizit ausgeführt ist, können diese Sensoren auch separat, insbesondere für jede Messgröße, voneinander getrennt ausgeführt sein. Das bedeutet, dass ein Sensor, der die zuvor genannten drei Messgrößen messen kann, alternativ auch durch zwei oder drei Sensoren ausgestaltet sein kann, die die entsprechenden Messgrößen messen.

Zur Bestimmung der Temperatur T_{vor, pri} des Primärfluids in der Primärvorlaufleitung 26 ist an oder in der Primärvorlaufleitung 26 ein Temperatursensor (Primärvorlauftemperatursensor) 38 angeordnet. Analog ist zur Messung der Temperatur T_{rück,pri} des Primärfluids in der Primärrücklaufleitung 28 ein Temperatursensor (Primärrücklauftemperatursensor) 40 angeordnet. Auch das Sekundärsystem 8 kann entsprechende Sensoren aufweisen. Zur Messung der Temperatur T_{vor,sek} des Sekundärfluids in der Sekundärvorlaufleitung 32 kann an oder in der Sekundärvorlaufleitung 32 ein Temperatursensor (Sekundärvorlauftemperatursensor) 42 angeordnet sein. Zur Messung der Temperatur T_{rück,sek} des Sekundärfluids in der Sekundärrücklaufleitung 34 kann an oder in der Sekundärrücklaufleitung 34 ein Temperatursensor (Sekundärrücklauftemperatursensor) 44 angeordnet sein. Zur Regelung der Differenztemperaturen innerhalb des Prozesskreislaufes 4 kann das Prozesssystem 3 auch entsprechende Temperatursensoranordnungen aufweisen. Zur Messung der Temperatur T_{2vor,pro} des Prozessfluids In der primärseitigen Prozessvorlaufleitung 20 ist ein Temperatursensor (primärseitiger Prozessvorlauftemperatursensor) 46 an oder In der primärseitigen Prozessvorlaufleitung 20 angeordnet. Zur Messung der Temperatur T_{2rück,pro} des Prozessfluids in der primärseitigen Prozessrücklaufleitung 24 ist an oder in der primärseitigen Prozessrücklaufleitung 24 ein Temperatursensor (primärseitiger Prozessrücklauftemperatursensor) 48 angeordnet. Zur Bestimmung der Temperatur T_{1vor,pro} des Prozessfluids in der sekundärseitigen Prozessvorlaufleitung 12 ist in oder an der sekundärseitigen Prozessvorlaufleitung 12 ein Temperatursensor (sekundärseitiger Prozessvorlaufsensor) 50 angeordnet. Zur Bestimmung der Temperatur T_{1rück,pro} des Prozessfluids in der sekundärseitigen Prozessrücklaufleitung 16 ist in oder an der sekundärseitgen Prozessrücklaufleitung 16 ein Temperatursensor (sekundärseitlger Prozessrücklaufsensor) 52 angeordnet.

Zur Bestimmung der entsprechenden Temperaturdifferenzen kann die thermodynamische Anlage und/oder der Regler eine Recheneinheit aufweisen, die die entsprechenden Temperaturdifferenzen bestimmt. Diese Temperaturdifferenzen können sein: Die Differenz aus der Primärvorlauftemperatur und Primärrücklauftemperatur und/oder die Differenz aus der Sekundärvorlauftemperatur und der Sekundärrücklauftemperatur und/oder die Differenz aus der primärseitigen Prozessvorlauftemperatur und primärseitigen Prozessrücklauftemperatur und/oder die Differenz aus der sekundärseitigen Prozessvorlauftemperatur und/oder sekundärseitigen Prozessrücklauftemperatur.

Damit der Regler die Regelgrößen auf die Referenzgrößen regeln kann, weisen zumindest ein Teil der Aktoren der thermodynamischen Anlage 2 Stelleingänge auf. So kann die Primärpumpe 30 einen Primärpumpenstelleingang 54, die Sekundärpumpe 36 einen Sekundärpumpenstelleingang 56, der Verdichter 10 einen Verdichterstelleingang 58 und/oder die Expansionsvorrichtung 18 einen Expansionsvorrichtungsstelleingang 60 aufweisen.

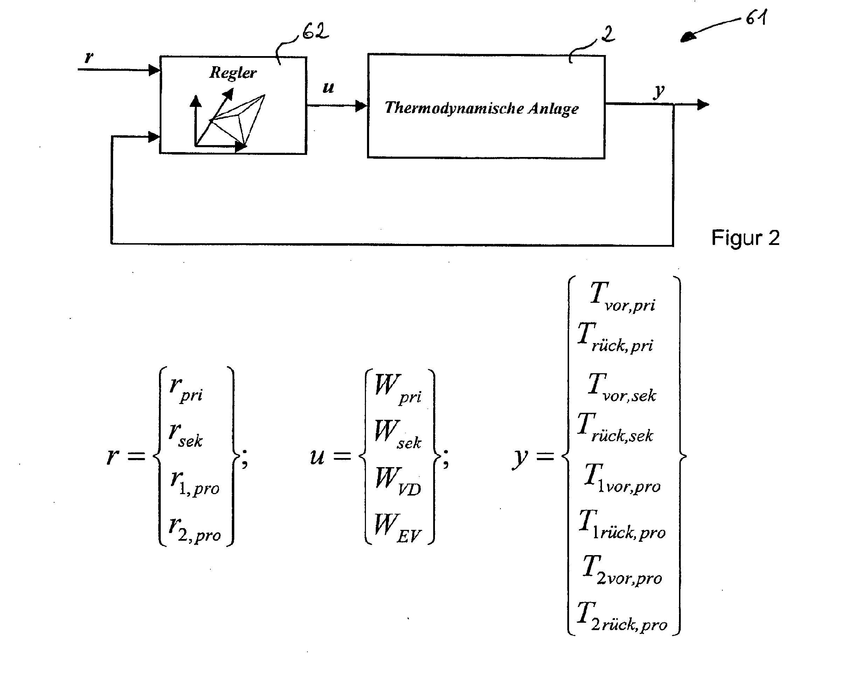

In Figur 2 ist schematisch ein Regelkrels dargestellt für eine thermodynamische Anlage mit einem Regler 62. Der Regler 62 und die thermodynamische Anlage 2 sind in dem geschlossenen Regelkreis 61 angeordnet. Die Referenzgröße r steht symbolisch für die Primärreferenzgröße rₚᵣᵢ, die Sekundärreferenzgröße rₛₑₖ, die primärseitige Prozessreferenzgröße r_{1,pro} und/oder die sekundärseitige Prozessreferenzgröße r_{2,prio}. Mit mindestens einer der Referenzgrößen vergleicht der Regler mindestens eine, vorzugsweise zugehörige, Regelgröße. Die Regelgrößen ermitteln sich aus dem gemessenen Temperaturen. Vorzugsweise ist die Primärregelgröße ΔTₚᵣᵢ die Temperaturdifferenz aus der Primärvorlauftemperatur T_{vor,pri} und der Primärrücklauftemperatur T_{rück,pri}, die Sekundärregelgröße ΔTₛₑₖ die Temperaturdifferenz aus der Sekundärvorlauftemperatur T_{vor,sek} und der Sekundärrücklauftemperatur T_{rück,sek}, die primärseitige Prozessregelgröße ΔT_{2pro,} die Temperaturdifferenz zwischen der primärseitigen Prozessvorlauftemperatur T_{2vor,pro} und der primärseitigen Prozessrücklauftemperatur T_{2rück,pro} und/oder die primärseitige Prozessregelgröße ΔT₁ₚᵣₒ die Temperaturdifferenz zwischen der primärseitigen Prozessvorlauftemperatur T_{1vor,pro} und der sekundärseitigen Prozessrücklauftemperatur T_{1rück,pro}. Sofern die thermodynamische Anlage 2 eine Recheneinheit zur Berechnung der Regelgrößen aus den gemessenen Temperaturen aufweist, werden die Regelgrößen direkt von der thermodynamischen Anlage 2 an den Regler 62 übermittelt. Anderenfalls können die gemessenen Temperaturen an den Regler 62 übermittelt werden. Diese Größen sind zusammengefasst durch den Buchstaben y in Figur 2 dargestellt. Aus den Referenzgrößen und Regelgrößen berechnet der Regler die Regelfehler. Der jeweilige Regelfehler ist die Differenz zwischen der jeweiligen Referenzgröße und der zugehörigen Regelgröße. Der Regler berechnet also insbesondere den Primärregelfehler, den Sekundärregelfehler, den primärseitigen Prozessregelfehler und/oder den sekundärseitigen Prozessregelfehler. Entsprechend dem Übertragungsverhalten des Reglers wird aus den Regelfehlern die Stellgröße beziehungsweise Stellgrößen ermittelt. Diese sind in Figur 2 zusammengefasst durch den Buchstaben u dargestellt. Erfindungsgemäß weist die Vorrichtung zur Reglung Leitungsverbindungen zwischen mindestens einem der Temperatursensoren der Primärvorlaufleitung, Primärrücklaufleitung, Sekundärvorlaufleitung und/oder Sekundärrücklaufleitung und dem Regler 62 sowie zwischen dem Regler 62 und der Primärpumpe 30 und/oder Sekundärpumpe 36 auf. Es ist somit möglich, die Primärregelgröße durch Stellen der Primärpumpe und/oder die Sekundärgröße durch Stellen der Sekundärpumpe zu regeln.

Da die Primärpumpe direkten Eingriff auf das Primärfluid hat und somit auf den Abkühlungsprozess des Primärfluids in dem ersten Wärmeübertrager, ist die Primärregelgröße auch durch das Stellen der Primärpumpe steuerbar. Außerdem hat die Sekundärpumpe direkten Eingriff auf die Fließgeschwindigkeit des Sekundärfluids durch den zweiten Wärmeübertrager und somit auch auf die Erwärmung des Sekundärfluids in dem zweiten Wärmeübertrager. Die Sekundärregelgröße ist somit auch durch ein Stellen der Sekundärpumpe steuerbar. Außerdem ist die Primärregelgröße durch die Sensorenanordnung an der Primärvorlaufleitung und Primärrücklaufleitung beobachtbar. Analog ist die Sekundärregelgröße durch die Sensorenanordnung an der Sekundärvorlaufleitung und der Sekundärrücklaufleitung beobachtbar. Analoge Überlegungen gelten für die primärseitige und/oder sekundärseitige Prozessregelgröße.

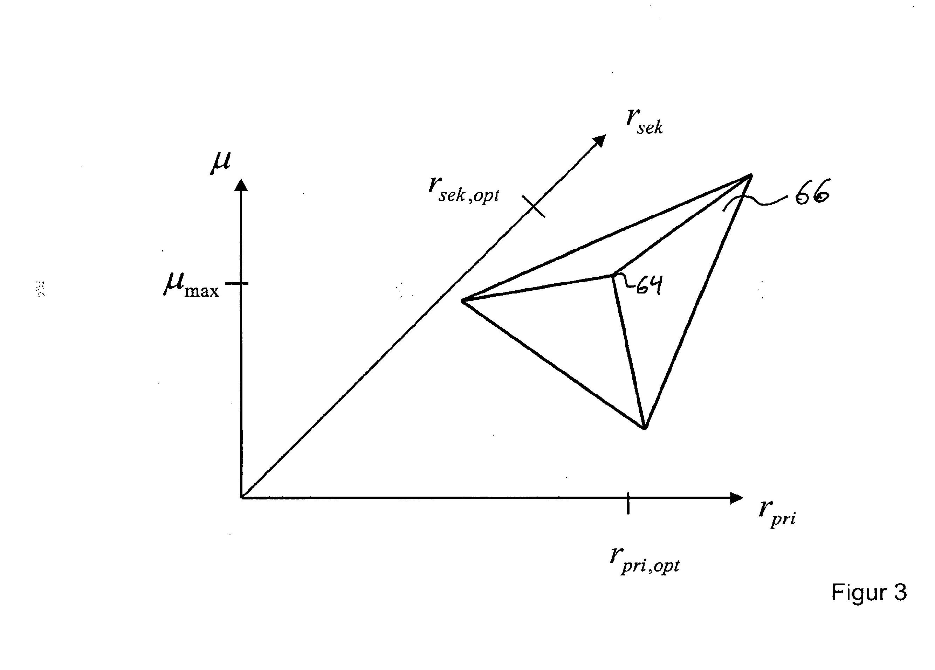

In Figur 3 ist eine graphische Darstellung eines Referenzdatenkennfeldes 66 gezeigt. Die Achsen sind der Wirkungsgrad µ, die Primärreferenzgröße rₚᵣᵢ und die Sekundärreferenzgröße rₛₑₖ. Die graphische Darstellung des Referenzdatenkennfeldes 66 zeigt in dem Punkt 64 ein globales Maximum des Wirkungsgrades µₘₐₓ. An diesem Punkt 64 ist der Wirkungsgrad optimal. Die entsprechende, optimale Primärreferenzgröße r_{pri,opt} und die optimale Sekundärreferenzgröße r_{sek,opt} können direkt abgelesen werden. Dieses erfolgt durch den Regler numerisch. Die auf diese Weise ermittelten optimalen Referenzgrößen verwendet der Regler als Referenzgrößen. Sofern der Regler die Regelgrößen den jeweils zugehörigen Referenzgrößen möglichst gut nachführt, ist die thermodynamische Anlage besonders wirksam.

## Patentansprüche

1. Verfahren zur Regelung, die in einer thermodynamischen Anlage mit
a. einem ersten Fluidkreislauf (Prozesskreislauf),
i. der einen ersten Wärmeübertrager, einen Verdichter, einen zweiten Wärmeübertrager und eine Expansionsvorrichtung aufweist und
ii. der von einem Fluid (Prozessfluid) durchflossen ist,
b. einer Fluidvor- und Fluidrücklaufleitung (Primärvorlaufleitung und Primärrücklaufleitung) eines ersten Systems (Primärsystem),
i. die durch den ersten Wärmeübertrager mit dem Prozesskreislauf gekoppelt sind,
c. einer Pumpe (Primärpumpe) des Primärsystems, durch die ein, insbesondere weiteres, Fluid (Primärfluid) durch die Primärvorlaufleitung und Primärrücklaufleitung pumpbar ist,
d. einer Fluidvor- und Fluidrücklaufleitung (Sekundärvorlaufleitung und Sekundärrücklaufleitung) eines zweiten Systems (Sekundärsystem),
i. die durch den zweiten Wärmeübertrager mit dem Prozesskreislauf gekoppelt sind, und
e. einer Pumpe (Sekundärpumpe) des Sekundärsystems, durch die ein, insbesondere weiteres, Fluid (Sekundärfluid) durch die Sekundärvorlaufleitung und Sekundärrücklaufleitung pumpbar ist, ausgeführt wird, **dadurch gekennzeichnet, dass**
f. ein Regler eine Temperaturdifferenz
i. des Primärfluids zwischen der Primärvorlaufleitung und der Primärrücklaufleitung (Primärregelgröße) durch ein Stellen der Primärpumpe und/oder
ii. des Sekundärfluids zwischen der Sekundärvorlaufleitung und der Sekundärrücklaufleitung (Sekundärregelgröße) durch ein Stellen der Sekundärpumpe regelt.

2. Verfahren nach dem vorhergehenden Anspruch, **dadurch gekennzeichnet, dass** die thermodynamische Anlage eine Wärmepumpe oder eine Kältemaschine, der erste Wärmeübertrager ein Erhitzer, der zweite Wärmeübertrager ein Kühler und/oder die Expansionsvorrichtung ein Expansionsventil ist.

3. Verfahren nach einem der vorhergehenden Ansprüche, **dadurch gekennzeichnet, dass** der Regler die Primärregelgröße anhand einer einstellbaren und/oder vorgebbaren Differenztemperatursollgröße (Primärreferenzgröße), die Sekundärregelgröße anhand einer, insbesondere weiteren, einstellbaren und/oder vorgebbaren Differenztemperatursollgröße (Sekundärreferenzgröße) regelt.

4. Verfahren nach einem der vorhergehenden Ansprüche, **dadurch gekennzeichnet, dass** der Primärreferenzgröße und/oder der Sekundärreferenzgröße jeweils eine Differenztemperatur aus einem Bereich von 0,5 bis 20 K, insbesondere aus einem Bereich von 1 bis 15 K, vorzugsweise von 1, 2, 3, 4, 5, 6, 7, 8, 9, 10, 11 oder 12 K, zugewiesen wird.

5. Verfahren nach einem der vorhergehenden Ansprüche, **dadurch gekennzeichnet, dass** die Ermittlung der Primärreferenzgröße, Sekundärreferenzgröße, primärseitigen Prozessreferenzgröße und/oder sekundärseitigen Prozessreferenzgröße folgende Schritte umfasst:
Messen der Temperaturen des Fluids der Primärvorlaufleitung, Primärrücklaufleitung, Sekundärvorlaufleitung, Sekundärrücklaufleitung, primärseitigen Prozessvorlaufleitung, primärseitigen Prozessrücklaufleitung, sekundärseitigen Prozessvorlaufleitung und/oder sekundärseitigen Prozessrücklaufletung; danach
Ermitteln eines Referenzkennfelds, das mindestens eine der Referenzgrößen, insbesondere die Primärreferenzgröße, Sekundärreferenzgröße, primärseitige Prozessreferenzgröße und/oder sekundärseitige Prozessreferenzgröße, Wirkungsgrade zuordnet, aus dem Datenkennfeld, wobei die Temperaturen des Fluids der Primärvorlaufleitung, Primärrücklaufleitung, Sekundärvorlaufleitung, Sekundärrücklaufleitung, primärseitigen Prozessvorlaufleitung, primärseitigen Prozessrücklaufleitung, sekundärseitigen Prozessvorlaufleitung und/oder sekundärseitigen Prozessrücklaufleitung mit ihren gemessenen Werten festgelegt werden; danach
Ermitteln des maximalen Wirkungsgrades aus dem Referenzkennfeld und danach der zugehörigen Referenzgröße beziehungsweise Referenzgrößen, insbesondere die Primärreferenzgröße, Sekundärreferenzgröße, primärseitigen Prozessreferenzgröße und/oder sekundärseitigen Prozessreferenzgröße.

6. Verfahren nach einem der vorhergehenden zwei Ansprüche, **dadurch gekennzeichnet, dass** während eines Betriebes die Ermittlung der Referenzgröße, insbesondere der Primärreferenzgröße, Sekundärreferenzgröße, primärseitige Prozessreferenzgröße und/oder sekundärseitige Prozessreferenzgröße, wiederholt durchgeführt wird.

7. Verfahren zur Regelung nach einem der vorhergehenden Ansprüche, **dadurch gekennzeichnet, dass** der Regler aus der Differenz aus der Primärreferenzgröße und der Primärregelgröße (Primärregelfehler) eine Primärstellgröße ermittelt, wobei die Primärstellgröße vorzugsweise eine Steuergröße der Primärpumpe ist,aus der Differenz aus der Sekundärreferenzgröße und der Sekundärregelgröße (Sekundärregelfehler) eine Sekundärstellgröße ermittelt, wobei die Sekundärstellgröße vorzugsweise eine Steuergröße der Sekundärpumpe ist, aus der Differenz aus der primärseitigen Prozessreferenzgröße und der primärseitigen Prozessregelgröße (primärseitiger Prozessregelfehler) mindestens eine primärseitige Prozessstellgröße ermittelt und/oder aus der Differenz aus der sekundärseitigen Prozessreferenzgröße und der sekundärseitigen Prozessregelgröße (sekundärseitiger Prozessregelfehler) mindestens eine sekundärseitige Prozessstellgröße ermittelt, wobei die primär- und/oder sekundärseitige Prozessstellgröße vorzugsweise eine Steuergröße des Verdichters und/oder insbesondere eine Stellgröße der Expansionsvorrichtung sind.

8. Verfahren nach einem der vorhergehenden Ansprüche, **dadurch gekennzeichnet, dass** der Regler ein proportionales, integrales und/oder differenzierendes Übertragungsverhalten, insbesondere vom Primärregelfehler zur Primärstellgröße, Sekundärregelfehler zur Sekundärstellgröße, primärseitigen Prozessregelfehler zur sekundärseitigen Prozessstellgröße und/oder sekundärseitigen Prozessregelfehler zur sekundärseitigen Prozessstellgröße, aufweist.

9. Verfahren zur Regelung nach einem der vorhergehenden Ansprüche, **dadurch gekennzeichnet, dass** eine Steuergröße der Primärpumpe beziehungsweise der Sekundärpumpe und/oder die Primärstellgröße beziehungsweise Sekundärstellgröße die Drehzahl, die Leistung, die Förderleistung, der Druck und/oder der Rotorflügelwinkel der Primärpumpe beziehungsweise Sekundärpumpe oder eine zu mindestens einer der Größen im Wesentlichen proportionalen und/oder von mindestens einer der Größen im Wesentlichen funktional abhängigen Größe ist.

10. Verfahren zur Regelung nach einem der vorhergehenden Ansprüche, **dadurch gekennzeichnet, dass** eine Steuergröße der Primärpumpe beziehungsweise der Sekundärpumpe und/oder die Primärstellgröße beziehungsweise Sekundärstellgröße die Spannung, der Strom, die Frequenz, die Pulsfrequenz, die Pulsweite und/oder eine sonstige Größe eines elektrischen Motors der Primärpumpe beziehungsweise Sekundärpumpe oder eine zu mindestens einer der Größen im Wesentlichen proportionalen und/oder von mindestens einer der Größen im Wesentlichen funktional abhängigen Größe ist.

11. Verfahren nach einem der vorhergehenden Ansprüche, **dadurch gekennzeichnet, dass** das Prozessfluid und das Primärfluid in dem ersten Wärmeübertrager und/oder das Prozessfluid und das Sekundärfluid in dem zweiten Wärmeübertrager vorzugsweise jeweils durch eine wärmedurchlässige Wand getrennt sind.

12. Vorrichtung zur Regelung einer thermodynamischen Anlage mit
a. einem Prozesskreislauf,
i. der einen ersten Wärmeübertrager, einen Verdichter, einen zweiten Wärmeübertrager und eine Expansionsvorrichtung aufweist und
ii. der von einem Prozessfluid durchflossen ist,
b. einer Primärvorlaufleitung und Primärrücklaufteitung eines Primärsystems,
i. die durch den ersten Wärmeübertrager mit dem Prozesskreislauf gekoppelt sind,
c. einer Primärpumpe des Primärsystems, durch die ein, insbesondere weiteres, Primärfluid durch die Primärvorlaufleitung und Primärrücklaufleitung pumpbar ist,
d. einer Sekundärvorlaufleitung und Sekundärrücklaufleitung eines zweiten Sekundärsystems,
i. die durch den zweiten Wärmeübertrager mit dem Prozesskreislauf gekoppelt sind, und
e. einer Sekundärpumpe des Sekundärsystems, durch die ein, insbesondere weiteres, Sekundärfluid durch die Sekundärvorlaufleitung und Sekundärrücklaufleitung pumpbar ist, **dadurch gekennzeichnet dass**
f. Leitungsverbindungen zwischen mindestens einem der Temperatursensoren der Primärvorlaufleitung, Primärrücklaufleitung, Sekundärvorlaufleitung und/oder Sekundärrücklaufleitung und dem Regler sowie zwischen dem Regler und der Primärpumpe und/oder Sekundärpumpe ausgebildet sind.

13. Vorrichtung nach dem vorhergehenden Anspruch, **dadurch gekennzeichnet, dass** Leitungsverbindungen zwischen dem Regler und mindestens einem der Temperatursensoren der primärseitigen Prozessvorlaufleitung, primärseitigen Prozessrücklaufleitung, sekundärseitigen Prozessvorlaufleitung und/oder sekundärseitigen Prozessrücklaufleitung sowie zwischen dem Regler und dem Verdichter und/oder der Expansionsvorrichtung ausgebildet sind.

14. Vorrichtung nach Anspruch 12 bis 13, **dadurch gekennzeichnet, dass** der Regler ein Datenkennfeld und eine Recheneinheit zur Ermittlung von Referenzgröße aufweist.
